# EUROPEAN PATENT APPLICATION

(11) **EP 3 680 632 A1**
(43) Date of publication of application: **15.07.2020**
(21) Application number: 19211369.4
(22) Date of filing: 26.11.2019
(51) Int. Cl.: G01F 23/30, G01F 25/00

(54) **LIQUID STORAGE TANK EQUIPPED WITH LIQUID LEVEL MONITORING DEVICE**

(30) Priority: 11.01.2019 CN 201920046275 U
(71) Applicant: Shimadzu Corporation, Kyoto-shi, Kyoto 604-8511 (JP)
(72) Inventor: SUN, Shengsheng, Shanghai,, Shanghai 200233 (CN)
(74) Representative: Müller-Boré & Partner Patentanwälte PartG mbB

(57) **Abstract**

The present invention relates to a liquid storage tank equipped with a liquid level monitoring device. The liquid storage tank includes a tank body that stores a liquid; a liquid level monitoring device that includes a rod member inserted into the liquid and a float member floating on a liquid surface of the liquid, wherein the liquid level monitors device monitors the liquid level of the liquid in accordance with a sliding movement of the float member along the rod member in the vertical direction in response to a change in the liquid level of the liquid; a press member that extends from the outside of the tank body into the tank body and includes a portion outside the tank body and a portion inside the tank body, wherein the portion inside the tank body is in contact with the float member, and the press member presses the float member below the liquid surface of the liquid by using a pressing force applied from the outside of the liquid storage tank to the portion outside the tank body; and a return member, wherein one end of the return member is fixed to the press member, and when the press member presses the float member, the return member applies a return force to the press member so as to return the press member to an initial position where the float member is not pressed by the press member.

## Description

### BACKGROUND OF THE INVENTION

### Field of the Invention

The present invention relates to a liquid storage tank equipped with a liquid level monitoring device, and more particularly to a liquid storage tank to be used in an atomic absorption spectrophotometer.

### Description of the Background Art

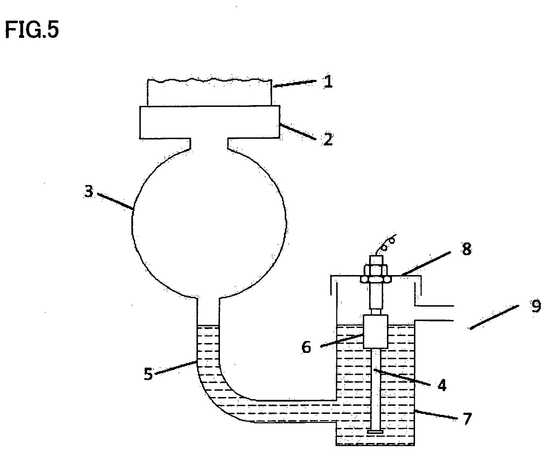

Atomic absorption spectrophotometers are widely used in various fields. For example, Fig. 5 illustrates a partial structure of an atomic absorption spectrophotometer that is configured to detect elements according to a combustion method. In Fig. 5, the reference numeral 2 denotes a combustion head, the reference numeral 1 denotes a combustion flame, and the reference numeral 3 denotes a gas-liquid atomizing and mixing chamber. In order to prevent the occurrence of a safety accident such as an explosion caused by the returning of the flame 1 to the gas-liquid atomizing and mixing chamber 3 (also referred to as "backfire"), it is required to maintain the pressure in the gas-liquid atomizing and mixing chamber 3 at a constant pressure. As a common approach, a certain volume of liquid is sealed in a communication pipe 5 and a liquid storage tank 9 that are in communication with the gas-liquid atomizing and mixing chamber 3 so as to maintain the gas-liquid atomizing and mixing chamber 3 at a relatively stable pressure. The liquid may be water or any other chemical liquid.

In order to ensure safety, it is required to monitor the pressure mentioned above. In other words, it is required to monitor the liquid level of the sealed liquid in real time while the spectrophotometer is operating. As a device for monitoring the liquid level, a float-type liquid level sensor may be adopted. As illustrated in Fig. 5, the liquid storage tank 9 includes a tank body 7 that stores a liquid. The liquid level sensor mainly includes two parts: a float member 6 and a rod member 4. The rod member 4 is inserted into the liquid, and the float member (float) 6 is floating on the liquid surface of the liquid and can slide in the vertical direction along the rod member 4 in accordance with a change in the liquid level of the liquid. The rod member 4 is fixed to a cover member (cover) 8 of the liquid storage tank. The liquid level is monitored by using sensor components built in the float member 6 and the rod member 4 to monitor the position of the float member 6 relative to the rod member 4 in real time. An electric signal indicating the liquid level is transmitted to a monitoring controller such as a computer via a transmission line (not shown).

Whether or not the float-type liquid level sensor mentioned above is working normally is directly related to the safe and stable operation of the spectrophotometer. Therefore, it is necessary to check whether or the liquid level sensor is working normally each time when the spectrophotometer is turned on to perform the self-checking operation (i.e., the self-checking operation of the liquid storage tank). During the self-checking operation, when the float member 6 is brought to the lower end and the upper end of the rod member 4, respectively, if the liquid level sensor outputs a low liquid level signal and a high liquid level signal correspondingly, it means that the liquid level sensor is working normally.

### SUMMARY OF THE INVENTION

In the liquid storage tank according to the prior art illustrated in Fig. 5, during the self-checking operation, it is required that the operator disassembles the liquid storage tank 9 and lifts the cover member 8 and the rod member 4 to move the float member 6 away from the liquid surface and then naturally drop it to the lowest position so as to obtain a liquid level signal (if the liquid level sensor is working normally, the liquid level signal indicates a low liquid level), and thereafter, the operator assembles the cover member 8 and the rod member 4 into the tank body 7, and the float member 6 floats to the highest position by the buoyant force of the liquid so as to obtain another float level signal (if the liquid level sensor is working normally, the liquid level signal indicates a high liquid level).

When performing the self-checking operation, the operator needs to operate the liquid storage tank 9 with one hand and operate the computer with the other hand. Specifically, the operator needs to disassemble and assemble the liquid storage tank 9 according to the instructions from the computer, and meanwhile needs to click buttons of a self-checking software executed on the computer, which makes the operation complicated.

In addition, even though the liquid in the liquid storage tank 9 is water, the combustion of the flame 1 may produce a water-soluble toxic substance, which makes the liquid harmful to the human health. When performing the self-checking operation on the liquid storage tank 9, it is necessary to disassemble the cover member 8 and lift the cover member 8 and the rod member 4, the operator may contact the liquid in the liquid storage tank 9, which may cause damage to the human health and pollution to the environment.

The present invention is made to solve the technical problems mentioned above, and an object thereof is to provide a liquid storage tank equipped with a liquid level monitoring device. The liquid storage tank includes a tank body that stores a liquid; a liquid level monitoring device that includes a rod member inserted into the liquid and a float member floating on a liquid surface of the liquid, wherein the liquid level monitoring device monitors the liquid level of the liquid in accordance with a sliding movement of the float member along the rod member in the vertical direction in response to a change in the liquid level of the liquid; a press member that extends from the outside of the tank body into the tank body and includes a portion outside the tank body and a portion inside the tank body, wherein the portion inside the tank body is in contact with the float member, and the press member presses the float member below the liquid surface of the liquid by using a pressing force applied from the outside of the liquid storage tank to the portion outside the tank body; and a return member, wherein one end of the return member is fixed to the press member, and when the press member presses the float member, the return member applies a return force to the press member so as to return the press member to an initial position where the float member is not pressed by the press member.

Thus, the operator may complete the self-checking operation without disassembling or assembling the liquid storage tank. In addition, the liquid storage tank is simple in structure and high in reliability.

The liquid storage tank equipped with the liquid level monitoring device according to a first embodiment of the present invention may further include a cover member disposed above the tank body, wherein the cover member is provided with a through hole for the press member to pass through, the return member is disposed inside a space surrounded by the tank body and the cover member, the one end of the return member is a lower end, and an upper end of the return member is fixed to the cover member.

Therefore, the press member and the return member may be made simple in structure with few modifications to the original structure of the liquid storage tank and without increasing the volume in the circumferential direction of the liquid storage tank, and the return member may be appropriately protected by the tank body and the cover member.

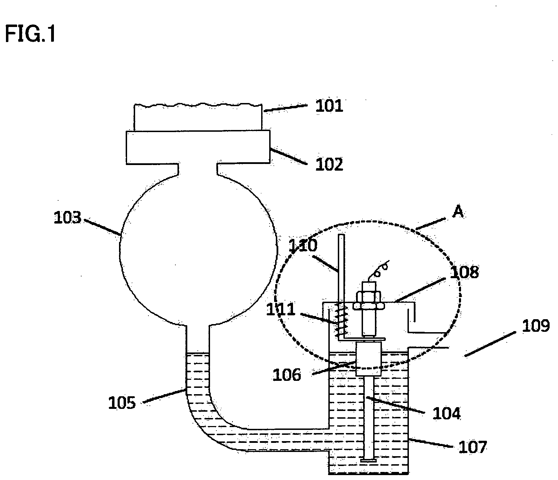

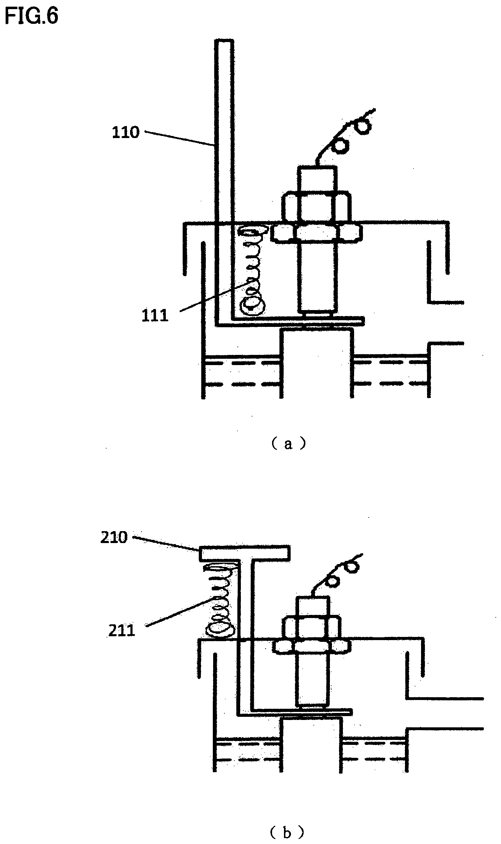

In this case, a part of the press member may be fitted in the return member, and a specific example thereof is illustrated in Fig. 1. In this case, the press member may support the return member and guide the movement of the return member. However, the present invention is not limited thereto. The press member may not be fitted in the return member, it may be disposed separately from the return member, and a specific example thereof is illustrated in Fig. 6(a). In this case, it is possible to prevent the press member and the return member from interfering with each other.

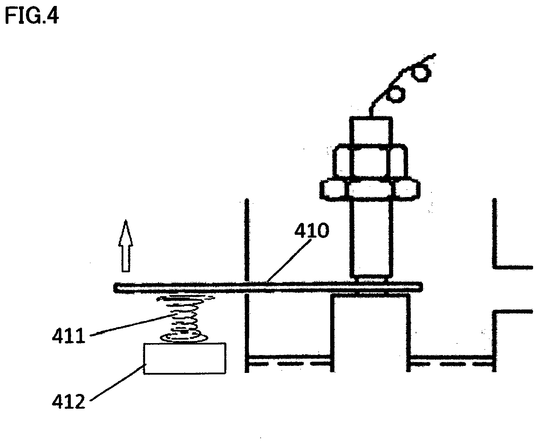

In the liquid storage tank equipped with the liquid level monitoring device according to a fourth embodiment of the present invention, it is acceptable that a side wall of the tank body is provided with a through hole for the press member to pass through, the return member is disposed outside the tank body, and the one end of the return member is an upper end, and a specific example thereof is illustrated in Fig. 4.

Therefore, the press member and the return member may be made simple in structure with few modifications to the original structure of the liquid storage tank and without increasing the volume in the height direction of the liquid storage tank, and the return member may be prevented from being corroded by the liquid in the tank body.

The present invention further provides a liquid storage tank equipped with a liquid level monitoring device, and the liquid storage tank includes a tank body that stores a liquid; a liquid level monitoring device that includes a rod member inserted into the liquid and a float member floating on a liquid surface of the liquid, wherein the liquid level monitoring device monitors the liquid level of the liquid in accordance with a sliding movement of the float member along the rod member in the vertical direction in response to a change in the liquid level of the liquid; a press member that extends from the outside of the tank body into the tank body and includes a portion outside the tank body and a portion inside the tank body, wherein the portion inside the tank body is in contact with the float member, and the press member presses the float member below the liquid surface of the liquid by using a pressing force applied from the outside of the liquid storage tank to the portion outside the tank body; and a return member, wherein an upper end of the return member is in contact with the press member, and when the press member presses the float member, the return member applies a return force to the press member so as to return the press member to an initial position where the float member is not pressed by the press member.

Thus, the operator may complete the self-checking operation without disassembling or assembling the liquid storage tank. In addition, the liquid storage tank is simple in structure and high in reliability.

In the liquid storage tank equipped with the liquid level monitoring device according to a second embodiment of the present invention, it is acceptable that the liquid storage tank further includes a cover member disposed above the tank body, the cover member is provided with a through hole for the press member to pass through, the return member is disposed outside a space surrounded by the tank body and the cover member, and a lower end of the return member is in contact with the cover member.

Therefore, the press member and the return member may be made simple in structure with few modifications to the original structure of the liquid storage tank and without increasing the volume in the circumferential direction of the liquid storage tank, and the return member may be prevented from being corroded by the liquid in the tank body.

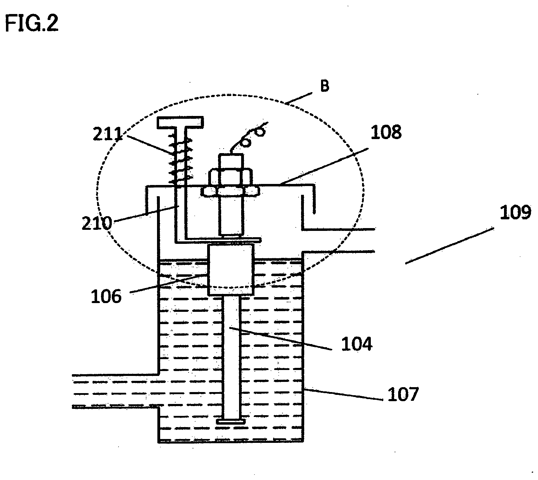

In this case, a part of the press member may be fitted in the return member, and a specific example thereof is illustrated in Fig. 2. In this case, the press member may support the return member and guide the movement of the return member. However, the present invention is not limited thereto. The press member may not be fitted in the return member, it may be disposed separately from the return member, and a specific example thereof is illustrated in Fig. 6(b). In this case, it is possible to prevent the press member and the return member from interfering with each other.

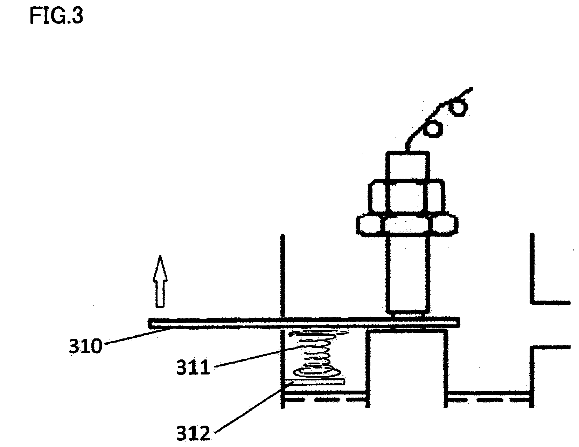

In the liquid storage tank provided with the liquid level monitoring device according to a third embodiment of the present invention, it is acceptable that a side wall of the tank body is provided with a through hole for the press member to pass through, and the return member is disposed inside the tank body. A specific example thereof is illustrated in Fig. 3.

Therefore, the press member and the return member may be made simple in structure with few modifications to the original structure of the liquid storage tank and without increasing the volume in the height direction of the liquid storage tank, and the return member may be appropriately protected by the tank body.

In each of the above embodiments, the return member may be a coil spring or a leaf spring. Thereby, the return member is simple in structure and high in reliability.

According to the liquid storage tank equipped with the liquid level monitoring device of the present invention, the operator may complete the self-checking operation of the liquid storage tank by pressing and releasing the press member without the need to disassemble and assemble the liquid storage tank, which makes it possible to reduce the work load of the operator and prevent the liquid containing the chemicals from causing any damage to the operator and the environment at the time of disassembling or assembling the liquid storage tank.

The present invention is high in reliability since it is only necessary to add a press member and a return member that are simple in structure to the conventional liquid storage tank with few modifications to the original structure of the liquid storage tank. Thereby, the present invention is relatively low in cost and may be used to improve a conventional liquid storage tank on the market.

### BRIEF DESCRIPTION OF THE DRAWINGS

Fig. 1 is a schematic diagram illustrating the structure of a liquid storage tank equipped with a liquid level monitoring device according to a first embodiment;
Fig. 2 is a schematic diagram illustrating the structure of a liquid storage tank equipped with a liquid level monitoring device according to a second embodiment;
Fig. 3 is a schematic diagram illustrating the structure of a liquid storage tank equipped with a liquid level monitoring device according to a third embodiment;
Fig. 4 is a schematic diagram illustrating the structure of a liquid storage tank equipped with a liquid level monitoring device according to a fourth embodiment;
Fig. 5 is a schematic diagram illustrating the structure of a liquid storage tank in the prior art;
Fig. 6(a) is a partial schematic diagram illustrating a modification of the first embodiment; and
Fig. 6(b) is a partial schematic diagram illustrating a modification of the second embodiment.

### DESCRIPTION OF THE PREFERRED EMBODIMENTS

### <First Embodiment>

Fig. 1 illustrates the structure of a liquid storage tank equipped with a liquid level monitoring device according to the present embodiment. In Fig. 1, the reference numeral 102 denotes a combustion head, the reference numeral 101 denotes a combustion flame, and the reference numeral 103 denotes a gas-liquid atomizing and mixing chamber.

Similar to the prior art, a certain volume of liquid is sealed in a communication pipe 105 and a liquid storage tank 109 that are in communication with the gas-liquid atomizing and mixing chamber 103. The liquid storage tank 109 includes a tank body 107 that is used to store a liquid. The liquid level sensor (that is, the liquid level monitoring device) mainly includes a float member 106 and a rod member 104. The rod member 104 is inserted into the liquid, and the float member 106 is floating on the liquid surface of the liquid and can slide in the vertical direction along the rod member 104 in accordance with a change in the liquid level of the liquid. Thereby, the liquid level sensor monitors the liquid level of the liquid. An electric signal indicating the liquid level is transmitted to a monitoring controller such as a computer via a transmission line (not shown).

In the present embodiment, the liquid storage tank 109 includes a cover member 108 provided above the tank body 107. In Fig. 1, the cover member 108 and the rod member 104 are fixed together. However, as long as the function of the liquid level sensor may be realized, the installation of the rod member 104 is not limited to thereto, it may be fixed to the bottom of the tank body 107, for example.

In the present embodiment, the liquid storage tank 109 is provided with a press member 110 and a return member 111. The press member 110 extends from the outside of the tank body 107 into the tank body 107 via a through hole provided on the cover member 108, and a portion thereof inside the tank body 107 is in contact with the float member 106, and the press member 110 presses the float member 106 below the liquid surface of the liquid by using a pressing force applied from the outside of the liquid storage tank (for example, applied by the operator) to a portion thereof outside the tank body. The return member 111 may be, for example, a coil spring or a leaf spring, an upper end thereof is fixed to the cover member 108, and a lower end thereof is fixed to the press member 110. As illustrated in Fig. 1, a part of the press member 110 is fitted in the return member 111.

According to the liquid storage tank equipped with the liquid level monitoring device according to the present embodiment, at the time of verifying a low liquid level signal in the self-checking operation, the operator does not need to open the cover member 108 and just needs to press the press member 110 so as to move the press member 110 downward, which lengthens the return member 111. The press member 110 overcomes a return force from the return member 111, and presses the float member 106 downward. If the liquid level sensor is working normally, the liquid level sensor sends a low liquid level signal. At the time of verifying a high liquid level signal, the operator may withdraw the force applied to the press member 110. Thereby, the press member 110 is returned by the return force to the initial position where the float member 106 is not pressed, and the float member 106 is automatically returned to a high liquid level by the buoyant force. If the liquid level sensor is working normally, the liquid level sensor sends a high liquid level signal.

Since the press member 110 is required to contact the liquid in the liquid storage tank 109, the press member 110 is preferably made of a chemical resistant material. In addition, since the return member 111 is disposed inside a space surrounded by the tank body 107 and the cover member 108, it may be corroded by the vaporized liquid in the space. Therefore, the return member 111 is preferably made of a chemical resistant material, and for example, it may be a plastic spring. Although Fig. 1 illustrates a case in which a part of the press member 110 is fitted in the return member 111, the arrangement is not limited thereto, and as a modification, a part of the press member 110 may be disposed separately from the return member 111 such as that illustrated in Fig. 6(a).

According to the above embodiment, the operator may complete the self-checking operation of the liquid storage tank by pressing and releasing the press member without the need to disassemble and assemble the liquid storage tank, which makes it possible to reduce the work load of the operator and prevent the liquid containing the chemicals from causing any damage to the operator and the environment at the time of disassembling or assembling the liquid storage tank.

### <Second Embodiment>

Fig. 2 illustrates the structure of a liquid storage tank equipped with a liquid level monitoring device according to the present embodiment. As illustrated in Fig. 2, the return member 211 is disposed outside a space surrounded by the tank body 107 and the cover member 108, a lower end thereof is in contact with the cover member 108, and an upper end thereof is in contact with the press member 210. As illustrated in Fig. 2, the upper end of a portion of the press member 210 outside the tank body 107 is formed into a "T" shape. Thus, there is no need to fix the return member 211 to the press member 210 and the cover member 108 as long as the upper end of the return member 211 is in contact with the press member 210 and the lower end thereof is in contact with the cover member 108. When an external force is applied to press the press member 210, the return member 211 is compressed by the T-shaped upper end so as to generate an upward return force.

Although Fig. 2 illustrates that a part of the press member 210 is fitted in the return member 211, the arrangement is not limited thereto, and as a modification, a part of the press member 210 may be disposed separately from the return member 211 such as that illustrated in Fig. 6(b).

In addition, the upper end of a portion of the press member 210 outside the space surrounded by the tank body 107 and the cover member 108 is not limited to the "T" shape, it may be a simple rod shape as illustrated in Fig. 1. In this case, the upper end of the return member 211 needs to be fixed to the press member 210 so that when the press member 210 is pressed downward, the return member 211 is compressed to generate an upward return force, and in this case, a part of the press member 210 is preferably fitted in the return member 211.

Further, since the return member 211 is disposed outside the space surrounded by the tank body 107 and the cover member 108, the return member 211 may not be made of a chemical resistant material, and for example, it may be a metal spring.

Other than that described in the above, the other parts of the present embodiment are the same as those of the first embodiment, and the description thereof will not be repeated.

### <Third Embodiment>

Fig. 3 illustrates the structure of a liquid storage tank equipped with a liquid level monitoring device according to the present embodiment. As illustrated in Fig. 3, a side wall of the tank body 107 is provided with a through hole for the press member 310 to pass through. The return member 311 is disposed inside the tank body 107, and the upper end thereof may contact the press member 310 without being fixed, and the lower end thereof may be placed on or fixed to a support member 312 disposed on the side wall of the tank body 107. The support member 312 illustrated in Fig. 3 extends from the side wall of the tank body 107 in the horizontal direction but not limited to thereto, and it may have any shape as long as it can support the return member 311. Fig. 3 merely illustrates an example, and if the liquid level of the liquid in the tank body 107 is sufficiently low or if the return member 311 is sufficiently long, the return member 311 may be directly placed on or fixed to the bottom of the tank body 107.

When the portion of the press member 310 outside the tank body 107 is lifted upward by the operator with an upward lifting force as illustrated by an arrow in Fig. 3, the through hole provided on the side wall of the tank body 107 serves as a fulcrum, and according to the lever principle, the portion of the press member 310 inside the tank body 107 is lowered to press the float member 106 below the liquid surface to a low liquid level, sending a low liquid level signal, and compress the return member 311 at the same time. As a result, the return member 311 generates an upward return force to return the portion of the press member 310 inside the tank body 107. On the other hand, when the operator withdraws the pressing force, the portion of the press member 310 inside the tank body 107 is returned by the return force to the initial position where the float member 106 is not pressed. Then, the float member 106 is also automatically returned to the high liquid level by the buoyant force and sends a high liquid level signal.

Other than that described in the above, the other parts of the present embodiment are the same as those of the first embodiment, and the description thereof will not be repeated.

### <Fourth Embodiment>

Fig. 4 illustrates the structure of a liquid storage tank equipped with a liquid level monitoring device according to the present embodiment. As illustrated in Fig. 4, the return member 411 is disposed outside the tank body 107, an upper end thereof is fixed to the press member 410, and a lower end is fixed to, for example, a support member 412 provided outside the tank body 107. The support member 412 may have any shape as long as it can support and fix the return member 411. Fig. 4 merely illustrates an example, and if the liquid level of the liquid in the tank body 107 is sufficiently low or if the length of the return member 411 is sufficiently long, the return member 411 may be directly fixed to the surface on which the tank body 107 is disposed.

When the portion of the press member 410 outside the tank body 107 is lifted upward by the operator with an upward lifting force as illustrated by an arrow in Fig. 4, the through hole on the side wall of the tank body 107 serves as a fulcrum, and according to the lever principle, the portion of the press member 410 inside the tank body 107 is lowered to press the float member 106 below the liquid surface to a lower liquid level, sending a liquid level signal, and lengthen the return member 411 at the same time, which generates a downward return force to return the portion of the press member 410 outside the tank body 107. On the other hand, when the operator withdraws the pressing force, the portion of the press member 410 outside the tank body 107 is lowered by the return force, and according to the lever principle, the portion of the press member 410 inside the tank body 107 is returned to the initial position where the float member 106 is not pressed. Then, the float member 106 is also automatically returned to the high liquid level by the buoyant force and sends a high liquid level signal.

In addition, since the return member 411 is disposed outside the tank body 107, the return member 411 may not be made of a chemical resistant material, and for example, it may be a metal spring.

Other than that described in the above, the other parts of the present embodiment are the same as those of the third embodiment, and the description thereof will not be repeated.

### Extension of Embodiments

Although the embodiments of the present invention have been described above, the present invention is not limited to the above-described embodiments, and any technical solution that does not depart from the technical idea of the present invention is included within the scope of the claims of the present invention. In addition, the embodiments described above may be arbitrarily combined as long as they are not contradict to each other.

### [REFERENCE SIGNS LIST]

1, 101: flame; 2, 102: combustion head; 3, 103: gas-liquid atomizing and mixing chamber; 4, 104: rod member; 5, 105: communication pipe; 6, 106: float member; 7, 107: tank body; 8, 108: cover member; 9, 109: liquid storage tank; 110, 210, 310, 410: press member; 111, 211, 311, 411: return member; 312, 412: support member

## Claims

1. A liquid storage tank equipped with a liquid level monitoring device, the liquid storage tank comprising:
a tank body that stores a liquid;
a liquid level monitoring device that includes a rod member inserted into the liquid and a float member floating on a liquid surface of the liquid, wherein the liquid level monitoring device monitors the liquid level of the liquid in accordance with a sliding movement of the float member along the rod member in the vertical direction in response to a change in the liquid level of the liquid;
a press member that extends from the outside of the tank body into the tank body and includes a portion outside the tank body and a portion inside the tank body, wherein the portion inside the tank body is in contact with the float member, and the press member presses the float member below the liquid surface of the liquid by using a pressing force applied from the outside of the liquid storage tank to the portion outside the tank body; and
a return member, wherein one end of the return member is fixed to the press member, and when the press member presses the float member, the return member applies a return force to the press member so as to return the press member to an initial position where the float member is not pressed by the press member.

2. The liquid storage tank equipped with the liquid level monitoring device according to claim 1, further comprising a cover member disposed above the tank body, wherein
the cover member is provided with a through hole for the press member to pass through,
the return member is disposed inside a space surrounded by the tank body and the cover member,
the one end of the return member is a lower end, and
an upper end of the return member is fixed to the cover member.

3. The liquid storage tank equipped the liquid level monitoring device according to claim 2, wherein
a part of the press member is fitted in the return member.

4. The liquid storage tank equipped with the liquid level monitoring device according to claim 1, wherein
a side wall of the tank body is provided with a through hole for the press member to pass through,
the return member is disposed outside the tank body, and
the one end of the return member is an upper end.

5. The liquid storage tank equipped with the liquid level monitoring device according to any one of claims 1 to 4, wherein
the return member is a coil spring or a leaf spring.

6. A liquid storage tank equipped with a liquid level monitoring device, the liquid storage tank comprising:
a tank body that stores a liquid;
a liquid level monitoring device that includes a rod member inserted into the liquid and a float member floating on a liquid surface of the liquid, wherein the liquid level monitoring device monitors the liquid level of the liquid in accordance with a sliding movement of the float member along the rod member in the vertical direction in response to a change in the liquid level of the liquid;
a press member that extends from the outside of the tank body into the tank body and includes a portion outside the tank body and a portion inside the tank body, wherein the portion inside the tank body is in contact with the float member, and the press member presses the float member below the liquid surface of the liquid by using a pressing force applied from the outside of the liquid storage tank to the portion outside the tank body; and
a return member, wherein an upper end of the return member is in contact with the press member, and when the press member presses the float member, the return member applies a return force to the press member so as to return the press member to an initial position where the float member is not pressed by the press member.

7. The liquid storage tank equipped with the liquid level monitoring device according to claim 6, further comprising a cover member disposed above the tank body, wherein
the cover member is provided with a through hole for the press member to pass through,
the return member is disposed outside a space surrounded by the tank body and the cover member, and
a lower end of the return member is in contact with the cover member.

8. The liquid storage tank equipped the liquid level monitoring device according to claim 7, wherein
a part of the press member is fitted in the return member.

9. The liquid storage tank equipped with the liquid level monitoring device according to claim 6, wherein
a side wall of the tank body is provided with a through hole for the press member to pass through, and
the return member is disposed inside the tank body.

10. The liquid storage tank equipped with the liquid level monitoring device according to any one of claims 6 to 9, wherein
the return member is a coil spring or a leaf spring.
